# EUROPEAN PATENT SPECIFICATION

(11) **EP 4 266 443 B1**
(45) Date of publication and mention of the grant of the patent: **28.01.2026**
(21) Application number: 22781523.0
(22) Date of filing: 28.03.2022
(51) Int. Cl.: H01M 10/056, H01M 10/0569, H01M 10/0567, H01M 10/058, H01M 10/0525, H01M 10/0568

(54) **LITHIUM SECONDARY BATTERY AND METHOD FOR MANUFACTURING THE SAME**
LITHIUMSEKUNDÄRBATTERIE UND VERFAHREN ZUR HERSTELLUNG DAVON
BATTERIE SECONDAIRE AU LITHIUM ET SON PROCÉDÉ DE FABRICATION

(30) Priority: 30.03.2021 KR 20210041444
(43) Date of publication of application: 25.10.2023
(73) Proprietor: LG Energy Solution, Ltd., Seoul 07335 (KR)
(72) Inventor: YUN, Sook, Daejeon 34122 (KR); CHOI, Ji Hyun, Daejeon 34122 (KR)
(74) Representative: Hoffmann Eitle
(86) International application number: PCT/KR2022/004302
(87) International publication number: WO 2022/211404

(56) References cited:
- KR-A- 20140 025 343
- KR-A- 20150 015 643
- KR-A- 20180 058 633
- KR-A- 20190 054 920
- KR-A- 20190 054 920
- KR-B1- 101 041 722
- UGATA YOSUKE ET AL: "Li-ion hopping conduction in highly concentrated lithium bis(fluorosulfonyl)amide/dinitrile liquid electrolytes", PHYSICAL CHEMISTRY CHEMICAL PHYSICS, vol. 21, no. 19, 25 April 2019 (2019-04-25), pages 9759 - 9768, XP093239066, ISSN: 1463-9076, DOI: 10.1039/C9CP01839E
- WU HAN ET AL: "LiDFOB Initiated In Situ Polymerization of Novel Eutectic Solution Enables Room-Temperature Solid Lithium Metal Batteries", ADVANCED SCIENCE, vol. 7, no. 23, 3 November 2020 (2020-11-03), Germany, XP093239018, ISSN: 2198-3844, DOI: 10.1002/advs.202003370

## Description

### TECHNICAL FIELD

### Cross-reference to Related Applications

This application claims the benefit of Korean Patent Application No. 10-2021-0041444, filed on March 30, 2021.

### Technical Field

The present invention relates to a method for a lithium secondary battery including an electrolyte solution containing a eutectic mixture of succinonitrile and lithium salt as a solvent.

### BACKGROUND ART

Recently, as application fields of a lithium secondary battery have rapidly expanded to not only the power supply of electronic devices such as electricity, electronics, communications, and computers but also the power storage supply of large-area devices such as automobiles and power storage devices, a demand for a lithium secondary battery having high capacity, high output, and high stability has been increasing.

The lithium secondary battery is generally manufactured by preparing a positive electrode formed of a lithium-containing transition metal oxide and a negative electrode including a carbon material capable of intercalating and deintercalating lithium ions and/or a silicon-based negative electrode active material, stacking the positive electrode and the negative electrode on both sides of a separator to form an electrode assembly having a predetermined shape, and then inserting this electrode assembly and an electrolyte solution into a battery case. In this case, it is generally known that a non-aqueous electrolyte solution in which a lithium salt is dissolved in a carbonate-based organic solvent such as ethylene carbonate (EC), propylene carbonate (PC), or diethyl carbonate (DEC) is used as the electrolyte solution. However, there is a disadvantage in that the possibility of volatilization of the carbonate-based organic solvent is not only high, but also safety is low due to combustion caused by increases in ambient temperature and temperature of the battery itself. Thus, development on an electrolyte for a lithium secondary battery which can supplement the above-described drawbacks has been attempted, and there is an attempt to use a eutectic mixture as an electrolyte solution for a lithium secondary battery. The eutectic mixture refers to a mixture of solid substances present in a liquid state in a particular eutectic temperature range, and has high stability characteristics due to a higher ignition point than conventional carbonate-based organic solvents.

However, when the eutectic mixture is used as an electrolyte solution, there is a problem in that the performance of the lithium secondary battery is degraded due to low lithium ion conductivity.

UGATA YOSUKE ET AL., PHYSICAL CHEMISTRY CHEMICAL PHYSICS, vol. 21, no. 19, 25 April 2019, pages 9759-9768 describes Li-ion hopping conduction in highly concentrated lithium bis(fluorosulfonyl)amide/dinitrile liquid electrolytes.

WU HAN ET AL., ADVANCED SCIENCE, vol. 7, no. 23, 3 November 2020 describes LiDFOB initiated in situ polymerization of novel eutectic solution which enables roomtemperature solid lithium metal batteries.

KR 102019/0054920 describes an electrolyte for a secondary battery and a lithium secondary battery including the electrolyte.

### DISCLOSURE OF THE INVENTION

### TECHNICAL PROBLEM

An aspect of the present invention provides a lithium secondary battery, in which an electrolyte solution using a eutectic mixture having excellent safety as a solvent is injected, capable of simultaneously securing performance and safety, and a method for manufacturing the lithium secondary battery.

### TECHNICAL SOLUTION

According to an aspect of the present invention, there is provided a lithium secondary battery including: a positive electrode; a separator; and a negative electrode, and including an electrolyte solution containing a eutectic mixture of succinonitrile and lithium salt as a solvent.

In addition, the present invention is characterized by applying a novel formation step including a process of charging a lithium secondary battery until a state of charge (SOC) reaches 55% to 65%, the lithium secondary battery being injected with an electrolyte solution containing a eutectic mixture of succinonitrile and lithium salt as a solvent.

### ADVANTAGEOUS EFFECTS

The lithium secondary battery according to the present invention has improved stability by using a eutectic mixture having a higher ignition point than the case of using an organic electrolyte solvent.

In addition, the lithium secondary battery manufactured by the method for manufacturing a lithium secondary battery according to the present invention generates a large amount of gas in the formation by applying a novel formation step. The method for manufacturing a lithium secondary battery according to the present invention removes, in a degassing step, a large amount of gas generated in the formation step, thereby suppressing a swelling phenomenon of the battery and simultaneously having excellent battery characteristics such as initial capacity and cycle characteristics.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Hereinafter, the present invention will be described in more detail.

First, a method for manufacturing a lithium secondary battery of the present invention will be described below.

The method for manufacturing a lithium secondary battery according to the present invention may include a step of preparing a lithium secondary battery including a positive electrode, a separator, and a negative electrode, the lithium secondary battery being injected with an electrolyte solution containing a eutectic mixture of succinonitrile and lithium salt; a formation step including charging the lithium secondary battery until a state of charge (SOC) reaches 55% to 65%; and a degassing step.

### Electrolyte Solution

### (A) Eutectic Mixture

An electrolyte solution which is injected into the lithium secondary battery according to the present invention may contain a eutectic mixture of succinonitrile and lithium salt as a solvent. The eutectic mixture of succinonitrile and lithium salt refers to a mixture of solid succinonitrile and a solid lithium salt present in a liquid state in a particular eutectic temperature range. The eutectic mixture of succinonitrile and lithium salt has a higher ignition point than conventional organic electrolyte solvents, and thus when this is used as an electrolyte solution, high-temperature stability is improved.

The eutectic temperature of the eutectic mixture of succinonitrile and lithium salt according to the present invention may be 20 °C to 30 °C, specifically, 23 °C to 27 °C. When the eutectic mixture has the above eutectic temperature, the eutectic mixture can be present in a liquid state at room temperature, and thus can be injected into the secondary battery as an electrolyte.

Meanwhile, the electrolyte solution may contain at least 80 wt% of the eutectic mixture of succinonitrile and lithium salt, preferably 80 wt% to at least 95 wt%, and more preferably 85 wt% to at least 90 wt% based on the total weight of the electrolyte solution. If the eutectic mixture of succinonitrile and lithium salt is used in the above content as a solvent contained in the electrolyte solution, a lithium secondary battery having excellent high-temperature stability may be obtained.

The eutectic mixture of succinonitrile and lithium salt according to the present invention may be a eutectic mixture of succinonitrile and lithium salt, for example, a eutectic mixture of succinonitrile and lithium bis(fluorosulfonyl)imide (LiFSI).

In this case, the eutectic mixture may contain 0.5-1.5 moles of lithium bis (fluorosulfonyl) imide (LiFSI), preferably, 0.7-1.3 moles with respect to 1 L of succinonitrile. When the range is satisfied, the mobility of lithium ions is secured, and thus the lithium secondary battery may have ion conductivity in which sufficient capacity characteristics are exhibited.

In addition, the eutectic mixture according to the present invention may contain succinonitrile, lithium bis(fluorosulfonyl)imide (LiFSI), and lithium difluoro(oxalato)borate (LiODFB). When the eutectic mixture contains lithium difluoro(oxalato)borate (LiODFB), a protective layer by B-F bonding is formed on the positive electrode collector, thereby suppressing corrosion of the positive electrode collector, for example, an aluminum thin film.

The eutectic mixture may contain 0.3-0.5 moles of lithium difluoro(oxalato)borate (LiODFB), preferably, 0.35-0.45 moles with respect to 1 L of succinonitrile. When the above range is satisfied, corrosion of the positive electrode collector, for example, an aluminum thin film, may be effectively suppressed.

The molar ratio of lithium bis(fluorosulfonyl)imide (LiFSI) and lithium difluoro(oxalato)borate (LiODFB) in the eutectic mixture according to the present invention may be 8:5 to 10:3, preferably 8.5:4.5 to 9.5:3.5. When the molar ratio of lithium bis(fluorosulfonyl)imide (LiFSI) and lithium difluoro(oxalato)borate (LiODFB) in the eutectic mixture satisfies the above range, excellent lithium ion conductivity may be obtained and an effect of suppressing corrosion of the positive electrode collector may be obtained.

### (B) Additives

In order to further improve prevention of decomposition of an electrolyte, low-temperature high-rate discharge characteristics, high-temperature stability, overcharge prevention, a battery swelling suppression effect at high temperatures, and the like, the electrolyte solution which is injected into the lithium secondary battery according to the present invention may further include additives. Examples of the additional additives may include at least one selected from the group consisting of a halogen-substituted or unsubstituted carbonate-based compound, a sultone-based compound, a sulfate-based compound, a phosphate-based or phosphite-based compound, a nitrile-based compound, a benzene-based compound, an amine-based compound, and a silane-based compound.

The halogen-substituted or unsubstituted carbonate-based compound may include, for example, vinylene carbonate (VC), vinylethylene carbonate, or fluoroethylene carbonate (FEC) .

The sultone-based compound, for example, may be at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound, for example, may include ethylene sulfate (Esa), trimethylene sulfate (TMS), or methyl trimethylene sulfate (MTMS).

The phosphate-based or phosphite-based compound, for example, may be at least one compound selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The nitrile-based compound, for example, may be at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be fluorobenzene, the amine-based compound may be triethanolamine or ethylene diamine, and the silane-based compound may be tetravinylsilane.

When the halogen-substituted or unsubstituted carbonate-based compound among the additives is added, a robuster negative electrode-protective film may be formed on the surface of the negative electrode during an initial formation step of the secondary battery. The halogen-substituted or unsubstituted carbonate-based compound may include at least one selected from the group consisting of vinylene carbonate (VC) and fluoroethylene carbonate (FEC), particularly.

Preferably, the electrolyte solution according to the present invention may include vinylene carbonate (VC) as an additive, and in this case, there is an advantage in that a negative electrode protective film is formed to improve battery performance.

The vinylene carbonate (VC) may be included in an amount of 1 wt% to 5 wt%, preferably 2 wt% to 4 wt%, based on the total weight of the electrolyte solution. When the above range is satisfied, the negative electrode protective film is formed to improve a battery service life.

Preferably, the electrolyte solution of the present invention may include a fluoroethylene carbonate (FEC) additive, and in this case, the electrolyte solution may obtain effects of forming a LiF layer to assist in SEI formation, reducing crystallinity of succinonitrile, and suppressing polymerization of succinonitrile.

The fluoroethylene carbonate (FEC) additive may be included in an amount of 3 wt% to 15 wt %, preferably 5 wt% to 15 wt % based on the total weight of the electrolyte solution. When the range is satisfied, the crystallinity of succinonitrile may be reduced, and the polymerization of succinonitrile may be effectively suppressed.

### step of Preparing Lithium Secondary Battery

The lithium secondary battery according to the present invention may be prepared in a form of a lithium secondary battery including a positive electrode; a separator; and a negative electrode, the lithium secondary battery being injected with an electrolyte solution containing a eutectic mixture of succinonitrile and lithium salt. Since the electrolyte solution has been described above, a description thereof will be omitted and other components will be described below.

The lithium secondary battery of the present invention may be prepared according to a typical method known in the art. For example, after an electrode assembly is formed by sequentially stacking a positive electrode, a negative electrode, and a separator disposed between the positive electrode and the negative electrode, the lithium secondary battery of the present invention may be prepared by inserting the electrode assembly into a battery case, and injecting the electrolyte solution according to the present invention.

### (a) Positive Electrode

The positive electrode may be prepared by coating a positive electrode collector with a positive electrode material mixture slurry including a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may be at least one selected from LiNi_{1-x-y-z}CoₓM¹_{y}M²_{z}O₂ (where M¹ and M² are each independently any one selected from the group consisting of Al, Ni, Co, Fe, Mn, V, Cr, Ti, W, Ta, Mg, and Mo, and x, y, and z are each independently atomic fractions of oxide composition elements, wherein 0≤x<0.5, 0≤y<0.5, 0≤z<0.5, and x+y+z=1) including LCO(LiCoO₂), LNO(LiNiO₂), LMO (LiMnO₂), LiMn₂O₄, LiCoPO₄, LFP(LiFePO₄), LiNiMnCoO₂, and NMC(LiNiCoMnO₂).

Specifically, the positive electrode active material may include a lithium metal oxide including lithium and at least one metal such as cobalt, manganese, nickel, or aluminum.

More specifically, the lithium metal oxide may be at least one selected from lithium-manganese-based oxide such as LiMnO₂ and LiMn₂0₄; lithium-cobalt-based oxide such as LiCoO₂; lithium-nickel-based oxide such as LiNiO₂; lithium-nickel-manganese-based oxide such as LiNi_{1-Y}Mn_{Y}O₂ (where 0<Y<1) and LiMn_{2-z}Ni_{z}O₄ (where 0<Z<2) ; lithium-nickel-cobalt-based oxide such as LiNi_{1-Y1}Co_{Y1}O₂ (where 0<Y1<1) ; lithium-manganese-cobalt-based oxide such as LiCo_{1-Y2}Mn_{Y2}O₂ (where 0<Y2<1) and LiMn_{2-z1}Co_{z1}O₄ (where 0<Z1<2) ; lithium-nickel-manganese-cobalt-based oxide such as Li(NiₚCo_{q}Mnᵣ₁)O₂ (where 0<p<1, 0<q<1, 0<r1<1, and p+q+r1=1) and Li(Niₚ₁Co_{q1}Mnᵣ₂)O₄ (where 0<p1<2, 0<q1<2, 0<r2<2, and p1+q1+r2=2); and lithium-nickel-cobalt-transition metal (M) oxide such as Li(Niₚ₂Co_{q2}Mnᵣ₃M_{S2})O₂ (where M is selected from the group consisting of Al, Fe, V, Cr, Ti, Ta, Mg, and Mo, and p2, q2, r3, and s2 are atomic fractions of each independent elements, wherein 0<p2<1, 0<q2<1, 0<r3<1, 0<S2<1, and p2+q2+r3+S2=1) .

Among these materials, in terms of the improvement of capacity characteristics and stability of the battery, the lithium metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni₀.₆Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂); or lithium nickel cobalt aluminum oxide (e.g., Li(Ni_{0.8}Co_{0.15}Al_{0.05})O₂, etc.), and, in consideration of a significant improvement due to the control of type and content ratio of elements constituting the lithium metal oxide, the lithium metal oxide may be at least one selected from Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂.

The positive electrode active material may be included in an amount of 60 wt% to 99 wt%, preferably 70 wt% to 99 wt%, and more preferably 80 wt% to 98 wt% based on a total weight of a solid content excluding the solvent in the positive electrode material mixture slurry.

The binder is a component that assists in the binding between the active material and the conductive agent and in the binding with the current collector.

Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, a styrene-butadiene rubber (SBR), a fluoro rubber, and various copolymers thereof.

The binder may be commonly included in an amount of 1 wt% to 20 wt%, preferably 1 wt% to 15 wt%, and more preferably 1 wt% to 10 wt% based on the total weight of the solid content excluding the solvent in the positive electrode material mixture slurry.

The conductive agent is a component for further improving the conductivity of the positive electrode active material.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be commonly included in an amount of 1 wt% to 20 wt%, preferably 1 wt% to 15 wt%, and more preferably 1 wt% to 10 wt% based on the total weight of the solid content excluding the solvent in the positive electrode material mixture slurry.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of a solid content including the positive electrode active material as well as optionally the binder and the conductive agent is in a range of 50 wt% to 95 wt%, preferably 50 wt% to 80 wt%, and more preferably 55 wt% to 70 wt%.

### (b) Negative Electrode

The negative electrode may be prepared by coating a negative electrode collector with a negative electrode slurry including a negative electrode active material, a binder, a conductive agent, and a solvent, and then drying and rolling the coated negative electrode collector.

The negative electrode collector generally has a thickness of 3 µm to 500 µm. The negative electrode collector is not particularly limited so long as it has high conductivity without causing adverse chemical changes surface the battery, and, for example, copper; stainless steel; aluminum; nickel; titanium; fired carbon; copper or stainless steel that is surface-treated with one of carbon, nickel, titanium, silver, or the like; an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

Furthermore, the negative electrode active material may include at least one selected from the group consisting of a lithium metal, a carbon material capable of reversibly intercalating/deintercalating lithium ions, a metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion lithium secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of lithium and the metal may be used.

At least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (where: Me is Mn, Fe, Pb, or Ge; Me' is Al, B, P, Si, Groups I, II and III elements of the periodic table, or halogen; 0<x≤1; 1≤y≤3; and 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, and lithium vanadium oxide.

In the present invention, the negative electrode active material may be graphite.

The negative electrode active material may be included in an amount of 60 wt% to 99 wt%, preferably 70 wt% to 99 wt%, and more preferably 80 wt% to 98 wt% based on a total weight of a solid content excluding the solvent in the negative electrode material mixture slurry.

The binder is a component that assists in the binding between the conductive agent, the active material, and the current collector. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber (SBR), a fluoro rubber, and various copolymers thereof.

The binder may be commonly included in an amount of 1 wt% to 20 wt%, preferably 1 wt% to 15 wt%, and more preferably 1 wt% to 10 wt% based on the total weight of the solid content excluding the solvent in the negative electrode material mixture slurry.

The conductive agent is a component for further improving conductivity of the negative electrode active material. Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content excluding the solvent in the negative electrode material mixture slurry.

The solvent may include water; or an organic solvent, such as N-methyl-2-pyrrolidone (NMP) or alcohol, and may be used in an amount such that desirable viscosity is obtained when the negative electrode active material as well as optionally the binder and the conductive agent are included. For example, the solvent may be included in an amount such that a concentration of a solid content including the negative electrode active material as well as optionally the binder and the conductive agent is in a range of 50 wt% to 95 wt%, for example, 70 wt% to 90 wt%.

In a case in which the metal itself is used as the negative electrode, the negative electrode may be prepared by a method of physically bonding, rolling, or depositing a metal on a metal thin film itself or the negative electrode collector. The depositing method may use an electrical deposition method or chemical deposition method of metal.

For example, the metal bonded/rolled/deposited on the metal thin film itself or the negative electrode collector may include one metal selected from the group consisting of nickel (Ni), tin (Sn), copper (Cu), and indium (In) or an alloy of two metals thereof.

### (C) Separator

The lithium secondary battery according to the present invention may include a separator between the positive electrode and the negative electrode.

The separator plays a role in blocking an internal short circuit between both electrodes and impregnating the electrolyte, wherein, after mixing a polymer resin, a filler, and a solvent to prepare a separator composition, the separator composition is directly coated on the electrode and dried to form a separator film, or, after the separator composition is cast on a support and dried, the separator may be prepared by laminating a separator film peeled from the support on the electrode.

As the separator, a typically used porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith, a typical porous nonwoven fabric, for example, a nonwoven fabric formed of high melting point glass fibers or polyethylene terephthalate fibers may be used, or safety-reinforcing separators (SRS) in which organic/inorganic composite coating layer is coated on both surfaces of a porous film substrate may be used, but the present invention is not limited thereto.

In this case, the porous separator may generally have a pore diameter of 0.01 µm to 50 µm and a porosity of 5% to 95%. Also, the porous separator may generally have a thickness of 5 µm to 300 um.

### Formation step

The method for manufacturing a lithium secondary battery according to the present invention may include a formation step including charging the lithium secondary battery until a state of charge (SOC) reaches 55% to 65%.

The formation step is a step of forming a solid electrolyte interface (SEI) layer of the negative electrode, and a conventional formation step generally charge the lithium secondary battery in a range of 10% to 40% of the SOC.

However, the formation step of the present invention is charged until the SOC reaches 55% to 65%, and thus may generate a larger amount of gas than the conventional formation step. The method for manufacturing a lithium secondary battery according to the present invention may remove, in a degassing step which will be described later, a large amount of gas generated in the formation step, thereby suppressing a swelling phenomenon of the battery and simultaneously having excellent battery characteristics such as initial capacity and cycle characteristics.

In the formation step according to the present invention, the charge may be performed for 4-7 hours, preferably, 5.5-6.5 hours. The charge is performed for the above range of time, and thus a large amount of gas may be sufficiently generated in the formation step according to the present invention.

The formation step according to the present invention may be performed at 40 °C to 50 °C.

The charge may be performed according to a method known in the art under the charge conditions in the formation step other than the SOC, charge time, and charge temperature. Specifically, the charge may be performed at a charge voltage of 3.6 V to 3.65 V under a pressure of 0.5 kgf/cm² to 5 kgf/cm². However, these charge voltage and pressure may vary with types or characteristics of a lithium secondary battery, and are not limited thereto.

### Degassing step

The method for manufacturing a lithium secondary battery according to the present invention may include a step of degassing the lithium secondary battery through the formation step.

The degassing step is to remove an activation gas generated inside the secondary battery through the formation step.

This degassing step may be performed by employing various degassing techniques well-known at the time of filing the present invention. For example, the degassing step may be performed in a method in which the elongated portion in a pouch-type secondary battery, in which one side thereof is elongated, is cut and the surrounding region is made to a vacuum state at a constant temperature, thereby gas is removed, and then the cut portion is sealed. However, since such a degassing technique is widely known to those skilled in the art, a more detailed description thereof will be omitted.

The lithium secondary battery manufactured by the method according to the present invention has excellent safety due to the use of the eutectic mixture having a high ignition point as a solvent of an electrolyte solution, and also exhibits excellent initial capacity, service life, and swelling characteristics by performing the formation step under specific conditions.

Specifically, the lithium secondary battery according to the present invention includes a positive electrode; a separator; a negative electrode; and an electrolyte solution, and in this case, the electrolyte solution contains at least 80 wt% of the eutectic mixture of succinonitrile and lithium salt based on the total weight of the electrolyte solution. Since configurations of the positive electrode, the separator, the negative electrode, and the electrolyte solution are the same as those described above, detailed descriptions thereof will be omitted.

Meanwhile, the lithium secondary battery according to the present invention has excellent service life characteristics as the discharge capacity retention rate after 79 cycles is 80% or more, preferably 85% or more, when charge and discharge are repeated in the range of 2.5 V to 4.25 V at a constant current of 0.1 C.

In addition, the lithium secondary battery according to the present invention has excellent swelling characteristics as the cell volume increase rate measured after being stored at 60 °C for two weeks is 10% or less, preferably 6% or less.

The lithium secondary battery according to the present invention may have a discharge capacity retention rate of 80% or more, preferably 85% or more after 79 cycles when charge and discharge are repeated in the range of 2.5 V to 4.25 V at a constant current of 0.1 C.

The lithium secondary battery according to the present invention as described above may be useful for portable devices, such as mobile phones, notebook computers, and digital cameras, electric cars such as hybrid electric vehicles (HEVs), and the like.

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); and a power storage system.

A shape of the lithium secondary battery of the present invention is not particularly limited, but may be a cylindrical type using a can, a prismatic type, a pouch type, a coin type, or the like.

The lithium secondary battery according to the present invention may not only be used in a battery cell that is used as a power source of a small device, but may also be preferably used as a unit cell in a medium-and-large-sized battery module including a plurality of battery cells.

Hereinafter, examples of the present invention will be described in detail so that a person with ordinary skill in the art can easily carry out the present invention. The present invention may, however, be embodied in many different forms and should not be construed as being limited to the examples set forth herein.

### Preparation Example 1

Lithium bis (fluorosulfonyl) imide (LiFSI, 0.9 mole) and lithium difluoro(oxalato)borate (LiODFB, 0.4 mole) were dissolved in 1 L of succinonitrile to prepare a eutectic mixture of succinonitrile and lithium salts. An electrolyte solution was prepared by adding Vinylene carbonate (VC) and fluoroethylene carbonate (FEC) thereto as additives in an amount of 3 wt% and 10 wt%, respectively, based on the total weight of the electrolyte solution.

### Preparation Example 2

An electrolyte solution was prepared by adding ethylene carbonate (EC), diethyl carbonate (DEC), succinonitrile, and fluoroethylene carbonate (FEC) in a volume ratio of 21:49:20:10, and dissolving lithium bis(fluorosulfonyl)imide (LiFSI) such that a molar concentration thereof becomes 1.2 M.

### Example 1

97.5 wt% of LiNi_{0.8}Mn_{0.1}Co_{0.1}O₂ as a positive electrode active material, 1.0 wt% of carbon black as a conductive agent, and 1.5 wt% of polyvinylidene fluoride as a binder were mixed in N-methyl-2-pyrrolidone solvent to prepare a positive electrode slurry (solid content: 50 wt%). One surface of a 12 µm-thick aluminum thin film was coated with the positive electrode slurry, dried, and then rolled to prepare a positive electrode.

95.0 wt% of graphite as a negative electrode active material, 1.5 wt% of carbon black as a conductive agent, and 3.5 wt% of butadiene rubber-carboxymethylcellulose (SBR-CMC) as a binder were mixed in deionized water to prepare a negative electrode slurry (solid content: 60 wt%). Both surfaces of a 6 µm-thick copper thin film was coated with the negative electrode slurry, dried, and then rolled to prepare a negative electrode.

Two single-sided positive electrodes and one double-sided negative electrode were sequentially stacked between four sheets of polyolefin-based porous separator coated with inorganic particles of aluminum oxide to prepare a monocell-type electrode assembly. This was placed inside a pouch-type battery case, and the electrolyte solution prepared in Preparation Example 1 was injected thereto to assemble a lithium secondary battery.

The assembled lithium secondary battery was charged and activated for 6 hours at a charge voltage of 3.65 V and a constant current of 0.1 C at 45 °C until the state of charge (SOC) reaches 60%. Then, the activated lithium secondary battery was degassed.

### Comparative Example 1

A lithium secondary battery was manufactured in the same manner as in Example 1 except that the electrolyte solution of Preparation Example 2 was used instead of the electrolyte solution of Preparation Example 1.

### Comparative Example 2

A lithium secondary battery was manufactured in the same manner as in Example 1 except that the lithium secondary battery was charged for 3 hours in the formation step until the SOC reaches 30%.

### Comparative Example 3

A lithium secondary battery was manufactured in the same manner as in Example 1 except that the lithium secondary battery was charged for 5 hours in the formation step until the SOC reaches 50%.

### Comparative Example 4

A lithium secondary battery was manufactured in the same manner as in Example 1 except that the lithium secondary battery was charged for 7 hours in the formation step until the SOC reaches 70%.

### Experimental Example 1 - Evaluation of Initial Discharge Capacity

Each of lithium secondary batteries manufactured in Example 1 and Comparative Examples 1 to 4 was charged to 4.2 V at a constant current of 0.1 C at 25 °C and then discharged to 2.5 V at a constant current of 0.1 C, and initial discharge capacity was measured. In this case, PNE-0306 from PNE solution Co., Ltd. was used as the charge/discharge equipment. Measurement results are listed in Table 1 below:

**[Table 1]**

| | Initial discharge capacity (mAh/g) |
|---|---|
| Example 1 | 149.9 |
| Comparative Example 1 | 132.0 |
| Comparative Example 2 | 147.7 |
| Comparative Example 3 | 147.8 |
| Comparative Example 4 | 148.3 |

It may be confirmed that Example 1 in which the electrolyte solution including the eutectic mixture of succinonitrile and lithium salt as a solvent is injected has the initial discharge capacity larger than Comparative Example 1 using the conventional organic electrolyte solvent. In particular, Comparative Example 1 manufactured by adding succinonitrile as an additive to an organic solvent used in a conventional electrolyte solution shows a result that the initial discharge capacity is significantly lowered, and as a result of disassembling and analyzing the battery, corrosion of the Al current collector is observed.

Meanwhile, it may be confirmed that Example 1, in which the formation step of charging the battery until the SOC reaches 60% is performed, has the initial discharge capacity larger than Comparative Examples 2 to 4 in which the batteries are charged until the SOC reaches 30%, 50%, and 70%, respectively.

### Experimental Example 2 - Evaluation of Cycle Characteristics

Each of the batteries manufactured in Example 1 and Comparative Examples 2 to 4 was charged to 4.2 V at a constant current of 0.1 C at room temperature (25 °C) and then discharged to 2.5 V at a constant current of 0.1 C, which was set as one cycle, and then 79 cycles of the charge and discharge were performed, and then a capacity retention was measured based on an initial capacity after 79 cycles. The results are listed in Table 2 below:

**[Table 2]**

| | Capacity retention (%) after 79 cycles |
|---|---|
| Example 1 | 88.8 |
| Comparative Example 2 | 17.1 |
| Comparative Example 3 | 43.0 |
| Comparative Example 4 | 29.6 |

It may be confirmed that Example 1, in which the formation step of charging the battery until the SOC reaches 60% is performed, has cycle characteristics superior to Comparative Examples 2 to 4 in which the batteries are charged until the SOC reaches 30%, 50%, and 70%, respectively.

### Experimental Example 3 - Evaluation of Swelling

Each of the secondary batteries manufactured in Example 1 and Comparative Examples 1 to 4 was fully charged to 4.2 V, and then stored at 60 °C for 2 weeks.

Before the storage, the cell volume of each of the fully-charged secondary battery was measured and then set as an initial volume of the secondary battery.

After 2 weeks, the cell volume of each of the stored secondary batteries was measured to calculate the swollen volume during the 2-week storage period. The percentage of the increased cell volume to the initial cell volume of the secondary battery was calculated to derive a cell volume increase rate after 2 weeks. The results are listed in Table 3 below:

**[Table 3]**

| | Cell volume increase rate (%) |
|---|---|
| Example 1 | 6 |
| Comparative Example 1 | 12 |
| Comparative Example 2 | 24 |
| Comparative Example 3 | 17 |
| Comparative Example 4 | 22 |

It may be confirmed that Example 1 in which the electrolyte solution including the eutectic mixture of succinonitrile and lithium salt as a solvent is injected has swelling less than Comparative Example 1 using the conventional organic electrolyte solvent. In addition, it may be confirmed that Example 1, in which the formation step of charging the battery until the SOC reaches 60% is performed, has the swelling less than Comparative Examples 2 to 4 in which the batteries are charged until the SOC reaches 30%, 50%, and 70%, respectively.

## Claims

1. A method for manufacturing a lithium secondary battery comprising:
a step of preparing a lithium secondary battery including a positive electrode, a separator, and a negative electrode, the lithium secondary battery being injected with an electrolyte solution containing a eutectic mixture of succinonitrile and lithium salt;
a formation step including a process of charging the lithium secondary battery until a state of charge (SOC) reaches 55% to 65%; and
a degassing step.

2. The method of claim 1, wherein the eutectic mixture of succinonitrile and lithium salt is contained in an amount of at least 80 wt% based on the total weight of the electrolyte solution.

3. The method of claim 1, wherein the eutectic temperature of the eutectic mixture is 20 °C to 30 °C.

4. The method of claim 1, wherein the eutectic mixture comprises lithium bis(fluorosulfonyl)imide (LiFSI) as the lithium salt.

5. The method of claim 4, wherein the eutectic mixture comprises 0.5-1.5 moles of lithium bis(fluorosulfonyl)imide (LiFSI) with respect to 1 L of succinonitrile.

6. The method of claim 1, wherein the eutectic mixture comprises lithium bis(fluorosulfonyl)imide (LiFSI) and lithium difluoro(oxalato)borate (LiODFB) as the lithium salts.

7. The method of claim 6, wherein the molar ratio of the lithium bis(fluorosulfonyl)imide (LiFSI) and the lithium difluoro(oxalato)borate (LiODFB) is 8:5 to 10:3.

8. The method of claim 1, wherein the electrolyte solution further comprises vinylene carbonate (VC) as an additive.

9. The method of claim 8, wherein the vinylene carbonate (VC) is comprised in an amount of 1 wt% to 5 wt% based on the total weight of the electrolyte solution.

10. The method of claim 1, wherein the electrolyte solution further comprises fluoroethylene carbonate (FEC) as an additive.

11. The method of claim 10, wherein the fluoroethylene carbonate (FEC) is comprised in an amount of 3 wt% to 15 wt% based on the total weight of the electrolyte solution.

12. The method of claim 1, wherein the formation step comprises a process of performing charging for 4.5 hours to 7.5 hours.

13. The method of claim 1, wherein the formation step is performed at 40 °C to 50 °C.

14. A lithium secondary battery comprises:
a positive electrode;
a separator;
a negative electrode; and
an electrolyte solution,
wherein the electrolyte solution comprises at least 80 wt% of a eutectic mixture of succinonitrile and lithium salt based on the total weight of the electrolyte solution, and a discharge capacity retention is 80% or more after 79 cycles when charge and discharge are repeated in the range of 2.5 V to 4.25 V at a constant current of 0.1 C.

15. The lithium secondary battery of claim 14, wherein the cell volume increase rate measured after the lithium secondary battery was stored at 60 °C for 2 weeks is 10% or less.

## Patentansprüche

1. Verfahren zur Herstellung einer Lithium-Sekundärbatterie, umfassend:
einen Schritt zum Vorbereiten einer Lithium-Sekundärbatterie, die eine positive Elektrode, einen Separator und eine negative Elektrode umfasst, wobei in die Lithium-Sekundärbatterie eine Elektrolytlösung, die eine eutektische Mischung aus Succinonitril und Lithiumsalz enthält, injiziert wird;
einen Ausbildungsschritt, der einen Prozess des Ladens der Lithium-Sekundärbatterie umfasst, bis ein Ladezustand (SOC) von 55 % bis 65 % erreicht ist; und
einen Entgasungsschritt.

2. Verfahren nach Anspruch 1, bei dem die eutektische Mischung aus Succinonitril und Lithiumsalz in einer Menge von mindestens 80 Gew.-%, bezogen auf das Gesamtgewicht der Elektrolytlösung, enthalten ist.

3. Verfahren nach Anspruch 1, bei dem die Eutektiktemperatur der eutektischen Mischung 20°C bis 30°C beträgt.

4. Verfahren nach Anspruch 1, bei dem die eutektische Mischung Lithiumbis(fluorsulfonyl)imid (LiFSI) als das Lithiumsalz umfasst.

5. Verfahren nach Anspruch 4, bei dem die eutektische Mischung 0,5 bis 1,5 Mol Lithiumbis(fluorsulfonyl)imid (LiFSI) bezogen auf 1 l Succinonitril umfasst.

6. Verfahren nach Anspruch 1, bei dem die eutektische Mischung Lithiumbis(fluorsulfonyl)imid (LiFSI) und Lithiumdifluoro(oxalato)borat (LiODFB) als die Lithiumsalze umfasst.

7. Verfahren nach Anspruch 6, bei dem das Molverhältnis von Lithiumbis(fluorsulfonyl)imid (LiFSI) und Lithiumdifluoro(oxalato)borat (LiODFB) 8:5 bis 10:3 beträgt.

8. Verfahren nach Anspruch 1, bei dem die Elektrolytlösung ferner Vinylencarbonat (VC) als ein Additiv umfasst.

9. Verfahren nach Anspruch 8, bei dem das Vinylencarbonat (VC) in einer Menge von 1 Gew.-% bis 5 Gew.-%, bezogen auf das Gesamtgewicht der Elektrolytlösung, umfasst ist.

10. Verfahren nach Anspruch 1, bei dem die Elektrolytlösung ferner Fluorethylencarbonat (FEC) als ein Additiv enthält.

11. Verfahren nach Anspruch 10, bei dem das Fluorethylencarbonat (FEC) in einer Menge von 3 Gew.-% bis 15 Gew.-%, bezogen auf das Gesamtgewicht der Elektrolytlösung, umfasst ist.

12. Verfahren nach Anspruch 1, bei dem der Ausbildungsschritt einen Prozess umfasst, bei dem 4,5 Stunden bis 7,5 Stunden lang geladen wird.

13. Verfahren nach Anspruch 1, bei dem der Ausbildungsschritt bei 40°C bis 50°C durchgeführt wird.

14. Lithium-Sekundärbatterie, umfassend:
eine positive Elektrode;
einen Separator;
eine negative Elektrode; und
eine Elektrolytlösung,
wobei die Elektrolytlösung mindestens 80 Gew.-% einer eutektischen Mischung aus Succinonitril und Lithiumsalz, bezogen auf das Gesamtgewicht der Elektrolytlösung, umfasst und eine Entladekapazitätserhaltung nach 79 Zyklen, wenn Lade- und Entladevorgänge im Bereich von 2,5 V bis 4,25 V bei einem konstanten Strom von 0,1 C wiederholt werden, 80% oder mehr beträgt.

15. Lithium-Sekundärbatterie nach Anspruch 14, wobei die nach einer Lagerung der Lithium-Sekundärbatterie bei 60°C für 2 Wochen gemessene Zellvolumenausdehnungsrate 10% oder weniger beträgt.

## Revendications

1. Procédé de fabrication d'une batterie secondaire au lithium, comprenant :
une étape de préparation d'une batterie secondaire au lithium comprenant une électrode positive, un séparateur et une électrode négative, la batterie secondaire au lithium étant injectée avec une solution électrolytique contenant un mélange eutectique de succinonitrile et d'un sel de lithium ;
une étape de formation incluant un processus de charge de la batterie secondaire au lithium jusqu'à ce qu'un état de charge (SOC) atteigne une valeur de 55 % à 65 % ; et
une étape de dégazage.

2. Procédé selon la revendication 1, dans lequel le mélange eutectique de succinonitrile et de sel de lithium est présent en une quantité d'au moins 80 % en poids par rapport au poids total de la solution électrolytique.

3. Procédé selon la revendication 1, dans lequel la température eutectique du mélange eutectique est de 20 °C à 30 °C.

4. Procédé selon la revendication 1, dans lequel le mélange eutectique comprend le bis(fluorosulfonyl)imide de lithium (LiFSI) en tant que sel de lithium.

5. Procédé selon la revendication 4, dans lequel le mélange eutectique comprend 0,5 à 1,5 mole de bis(fluorosulfonyl)imide de lithium (LiFSI) par rapport à 1 L de succinonitrile.

6. Procédé selon la revendication 1, dans lequel le mélange eutectique comprend le bis(fluorosulfonyl)imide de lithium (LiFSI) et le difluoro(oxalato)borate de lithium (LiODFB) en tant que sels de lithium.

7. Procédé selon la revendication 6, dans lequel le rapport molaire entre le bis(fluorosulfonyl)imide de lithium (LiFSI) et le difluoro(oxalato)borate de lithium (LiODFB) est 8:5 à 10:3.

8. Procédé selon la revendication 1, dans lequel la solution électrolytique comprend en outre du carbonate de vinylène (VC) en tant qu'additif.

9. Procédé selon la revendication 8, dans lequel le carbonate de vinylène (VC) est compris en une quantité de 1 % en poids à 5 % en poids par rapport au poids total de la solution électrolytique.

10. Procédé selon la revendication 1, dans lequel la solution électrolytique comprend en outre du carbonate de fluoroéthylène (FEC) en tant qu'additif.

11. Procédé selon la revendication 10, dans lequel le carbonate de fluoroéthylène (FEC) est comprise en une quantité de 3 % en poids à 15 % en poids par rapport au poids total de la solution électrolytique.

12. Procédé selon la revendication 1, dans lequel l'étape de formation comprend une opération consistant à mettre en œuvre une charge pendant 4,5 à 7,5 heures.

13. Procédé selon la revendication 1, dans lequel l'étape de formation est mise en œuvre à 40 °C à 50 °C.

14. Batterie secondaire au lithium comprenant :
une électrode positive ;
un séparateur ;
une électrode négative ; et
une solution électrolytique,
dans laquelle la solution électrolytique comprend au moins 80 % en poids d'un mélange eutectique de succinonitrile et de sel de lithium par rapport au poids total de la solution électrolytique, et une rétention de capacité de décharge est 80 % ou plus après 79 cycles lorsque la charge et la décharge sont répétées dans une plage de 2,5 V à 4,25 V à un courant constant de 0,1 C.

15. Batterie secondaire au lithium selon la revendication 14, dans laquelle le taux d'augmentation du volume de la cellule mesuré après un stockage de la batterie secondaire au lithium à 60 °C pendant 2 semaines est de 10 % ou moins.
